# EUROPEAN PATENT APPLICATION

(11) **EP 3 779 870 A1**
(43) Date of publication of application: **17.02.2021**
(21) Application number: 19775702.4
(22) Date of filing: 26.03.2019
(51) Int. Cl.: G06T 7/00, G06Q 10/06, G06T 7/20

(54) **INFORMATION MANAGEMENT SYSTEM**

(30) Priority: 30.03.2018 JP 2018070182; 24.10.2018 JP 2018200345
(71) Applicant: DAIKIN INDUSTRIES, LTD., Osaka-shi, Osaka 530-8323 (JP)
(72) Inventor: KITAGAWA, Keita, Osaka 530-8323 (JP); HANDA, Youichi, Osaka 530-8323 (JP)
(74) Representative: Global IP Europe Patentanwaltskanzlei
(86) International application number: PCT/JP2019/012850
(87) International publication number: WO 2019/189179

(57) **Abstract**

A management system (100) includes a photographing unit (40), a data generation unit (63), a storage unit (61), and a management unit (64). The data generation unit (63) extracts a person (PS) in a target space (SP) based on characteristic of the person (PS) included in photographing data (D1). The data generation unit (63) generates extracted data (D2). The extracted data (D2) is data associated with the extracted person (PS). The storage unit (61) stores the extracted data (D2) generated by the data generation unit (63). The management unit (64) manages information about the person (PS) existing in the target space (SP) based on the extracted data (D2).

## Description

### TECHNICAL FIELD

The present disclosure relates to an information management system.

### BACKGROUND ART

As disclosed in, for example, Patent Literature 1 (JP 2017-45373 A), there is known a system that manages a person's location using images from a plurality of photographing devices in a target space (for example, in a company or a school). In Patent Literature 1, a person is identified by acquiring, from an image of a photographing device, a code attached to a hat worn by the person.

### SUMMARY OF THE INVENTION

### <Technical Problem>

In Patent Literature 1, it is not possible to extract a person who is not wearing a hat with a code attached. It is thus impossible to manage information about a person other than a specific person existing in the target space.

Provided is a system that can manage information about a person existing in the target space.

### <Solution to Problem>

An information management system according to a first aspect includes a photographing device, a data generation unit, a storage unit, and a management unit. The photographing device is installed in a target space. The data generation unit extracts a person in the target space based on characteristic of the person included in an image captured by the photographing device. The data generation unit generates person data. The person data is data associated with the person that has been extracted. The storage unit stores the person data generated by the data generation unit. The management unit manages information about the person existing in the target space based on the person data.

Thus, the characteristic of the person included in the captured image of the photographing device installed in the target space are identified, and the information about the person existing in the target space is managed based on the person data generated with respect to the extracted and specified person. This makes it possible to easily manage the information about the person (for example, location information and information on a location history or the like) in the target space. That is, this makes it possible to manage the person existing in the target space.

The "image" here includes a still image and/or a moving image.

Further, the "storage unit" here includes a main storage unit that temporarily stores the person data and/or a large-capacity auxiliary storage unit that stores article data.

The "extraction" here includes the distinction between a person and an object, the specification of an individual, or the determination of a movement content regarding the person included in the image.

An information management system according to a second aspect is the information management system according to the first aspect, in which the data generation unit extracts a location of the person included in the image captured by the photographing device. The person data includes information about the location of the person.

An information management system according to a third aspect is the information management system according to the first or second aspect, in which the data generation unit extracts location time with respect to the person included in the image captured by the photographing device. The person data includes information about the location time of the person that has been extracted. By knowing the location time of the person, a location history of a specific person can be known.

An information management system according to a fourth aspect is the information management system according to any one of the first to third aspects, in which the data generation unit extracts a behavior content of the person included in the image captured by the photographing device. The person data includes information about the behavior content of the person that has been extracted. This makes it possible to know the specific behavior content of the extracted person.

An information management system according to a fifth aspect is the information management system according to the first or second aspect, in which the data generation unit extracts location time and behavior content of the person included in the image captured by the photographing device. The person data includes information about the location time and the behavior content of the person that has been extracted. This makes it possible to know both the location time and the specific behavior content of the extracted person.

In the information management system according to the fourth or fifth aspect, the "behavior content" includes not only a presence or absence of the person in the target space but also a specific action or work content of the person in the target space. For example, the "behavior content" includes the person's detailed behavior such as "reading," "writing," "working using a PC," "application in the most active state on a PC (that is, the application that is mainly used)," "phone call", "conversation", "conversation partner", "meeting", "eating", "water intake", "content of food or drink ingested (item, intake or residual amount, or the like)", "work using a printer", "cleaning work", "operation on a manufacturing line", "walking", or "exercises".

An information management system according to a sixth aspect is the information management system according to the fourth or fifth aspect, in which the data generation unit extracts a conversation partner of the person included in the image captured by the photographing device as the behavior content. This makes it possible to know the conversation partner of the specific person.

An information management system according to a seventh aspect is the information management system according to any one of the fourth to sixth aspects, in which the person data includes information about a history of the behavior content of the person that has been extracted. This makes it possible to know the history of behavior content of the specific person.

An information management system according to an eighth aspect is the information management system according to any one of the first to seventh aspects, in which the data generation unit extracts the work content in an information processing device with respect to the person who is working using the information processing device. The person data includes information about the work content in the information processing device regarding the person included in the image captured by the photographing device. This makes it possible to know the work content of the specific person on the information processing device.

An information management system according to a ninth aspect is the information management system according to any one of the first to eighth aspects, further including an output unit that outputs the person data.

An information management system according to a tenth aspect is the information management system according to any one of the first to ninth aspects, wherein the data generation unit extracts the person based on a movement of the person in the target space. This makes it possible to extract the person and identify the individual with high accuracy.

When a movement peculiar to a person such as walking, working, doing desk work, or eating or drinking is recognized, the target performing the movement may be recognized as a person.

The information management system according to an eleventh aspect is the information management system according to any one of the first to tenth aspects, in which the data generation unit estimates a distance between elements from the image. The data generation unit extracts a person based on the estimated distance. This makes it possible to extract the person and identify the individual with high accuracy.

An information management system according to a twelfth aspect is the information management system according to any one of the first to eleventh aspects, in which the data generation unit includes a learning unit. The learning unit learns the characteristic of the person based on the image captured by the photographing device. This makes it possible to extract the person and identify the individual with high accuracy.

An information management system according to a thirteenth aspect is the information management system according to any one of the first to twelfth aspects, in which the management unit individually generates person history data with respect to the person existing in the target space based on the person data stored in the storage unit. The person history data is data relating to the location history or behavior history of a person. As a result, the location history or behavior history of each person is automatically generated.

An information management system according to a fourteenth aspect is the information management system according to any one of the first to thirteenth aspects, including a plurality of the photographing devices. The data generation unit identifies characteristic of the person based on images captured by the plurality of photographing devices. The plurality of photographing devices is included, and thus the person can be extracted in a wide range.

An information management system according to a fifteenth aspect is the information management system according to any one of the first to fourteenth aspects, in which the photographing device is disposed in an air conditioner. The air conditioner is installed in the target space. The photographing device is disposed in the air conditioner, and it is therefore possible to extract the person in a wide range within the target space.

The "air conditioner" here is, for example, a ceiling-embedded or ceiling-suspended indoor unit installed on the ceiling, a wall-mounted indoor unit installed on a side wall near the ceiling, or the like.

### BRIEF DESCRIPTION OF THE DRAWINGS

FIG. 1 is a schematic configuration diagram of a management system.
FIG. 2 is a schematic diagram showing an example of an installation mode of devices in a target facility.
FIG. 3 is a schematic diagram showing one example of a target space.
FIG. 4 is a schematic diagram showing one example of an installation mode of an indoor unit, a remote controller, and a photographing unit in the target space.
FIG. 5 is a schematic diagram roughly showing a configuration mode of a management device.
FIG. 6 is a schematic diagram roughly showing a storage area included in a storage unit.
FIG. 7 is a schematic diagram of a photographing unit information table (photographing unit information).
FIG. 8 is a schematic diagram of a person information table (person information).
FIG. 9 is a schematic diagram of extracted data.
FIG. 10 is a schematic diagram of person history data.
FIG. 11 is a schematic diagram roughly showing one example of extraction processing by an extraction unit.
FIG. 12 is a schematic diagram of display data.
FIG. 13 is a flowchart showing one example of a flow of processing of the management device.
FIG. 14 is a schematic diagram of extracted data according to Modification 1.
FIG. 15 is a schematic diagram of person history data according to Modification 1.
FIG. 16 is a schematic diagram of display data according to Modification 1.
FIG. 17 is a schematic diagram showing one example of a display mode of the display data according to Modification 1.

### DESCRIPTION OF EMBODIMENT

Hereinafter, a management system 100 (information management system) according to one embodiment of the present disclosure will be described. Note that the following embodiment is merely a specific example of the present disclosure, and does not intend to limit the technical scope of the present disclosure. The embodiment may be appropriately modified without departing from the gist of the present disclosure.

### (1) Management system 100

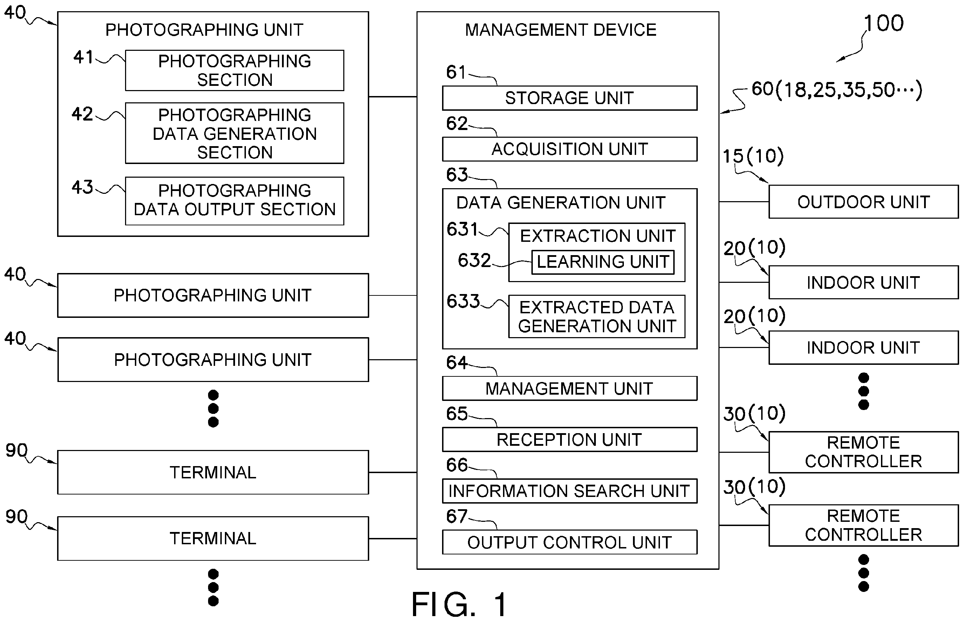

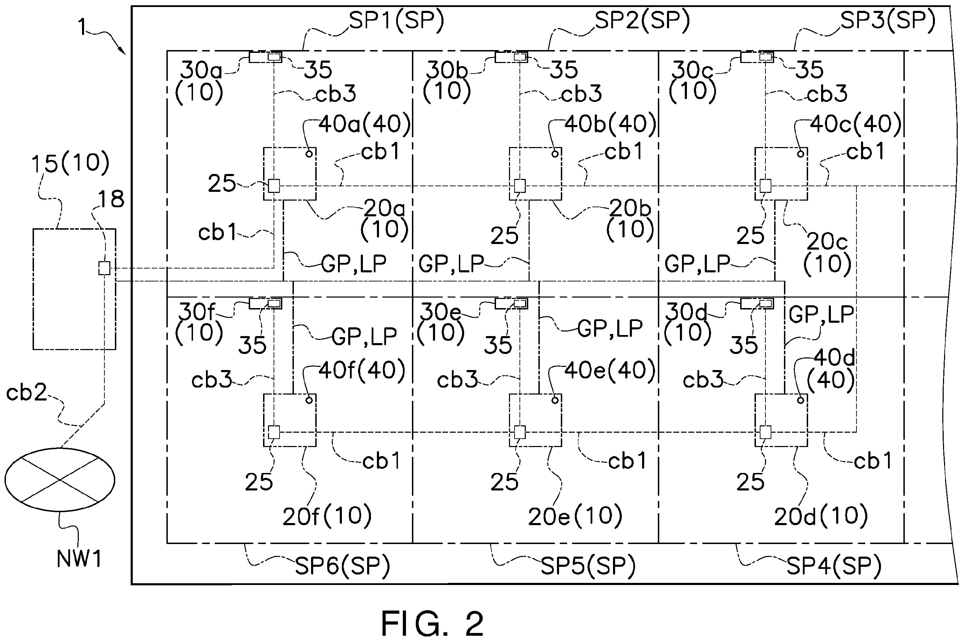

FIG. 1 is a schematic configuration diagram of a management system 100. FIG. 2 is a schematic diagram showing one example of an installation mode of devices in a target facility 1. The management system 100 individually generates data (person history data D3 described later) regarding a person PS existing in a specific space (target space SP), and manages information about each person PS based on the generated data (for example, presence management, location management, and location search). The management system 100 is applied to, for example, attendance management and behavior management of workers, attendance management and behavior management of students at school, and security management in facilities.

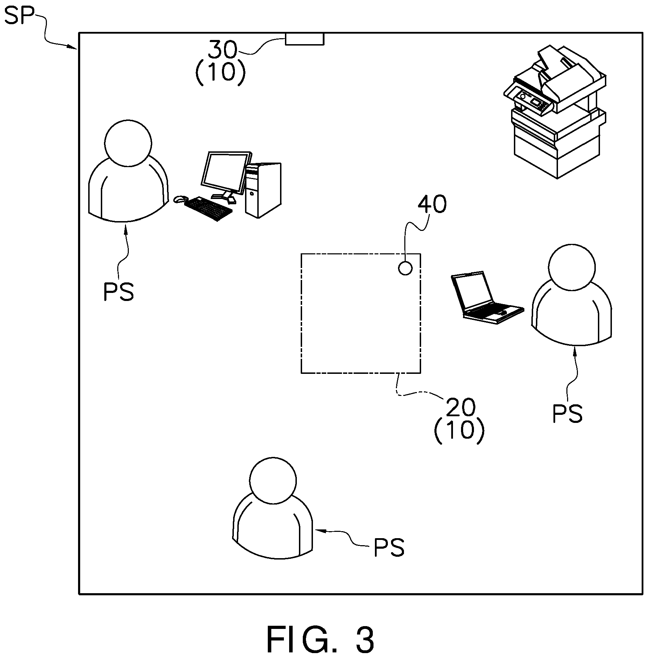

In this embodiment, the management system 100 is applied to the target facility 1. The target facility 1 includes the target space SP. In this embodiment, the target facility 1 includes a plurality of the target spaces SP (SP1, SP2, SP3, SP4, SP5, SP6...). Each target space SP is, for example, a space in which the person PS is active as shown in FIG. 3, and is a space used, for example, as an office. However, the target space SP is not limited to this, and may be used, for example, as a commercial facility such as a department store, a school, a factory, a hospital, or a residence. Here, the person PS is a person who works, learns, or lives in the target facility 1, a visitor who has visited the target facility 1, or the like.

The management system 100 mainly includes an air conditioner 10, a plurality of photographing units 40, and a management device 60.

### (1-1) Air conditioner 10

The air conditioner 10 is an apparatus that provides air conditioning such as cooling or heating in the target space SP. The air conditioner 10 cools or heats the target space SP by performing a vapor compression refrigeration cycle in a refrigerant circuit.

The air conditioner 10 mainly includes an outdoor unit 15 as a heat source unit, and a plurality (here, 6 or more) of indoor units 20 (20a, 20b, 20c, 20d, 20e, 20f,...) as utilizing units, and a plurality (here, the same number as the indoor units 20) of remote controllers 30 (30a, 30b, 30c, 30d, 30e, 30f,...).

In this embodiment, the indoor unit 20a is installed in the target space SP1, the indoor unit 20b is installed in the target space SP2, the indoor unit 20c is installed in the target space SP3, the indoor unit 20d is installed in the target space SP4, the indoor unit 20e is installed in the target space SP5, and the indoor unit 20f is installed in the target space SP6. In the air conditioner 10, the outdoor unit 15 and the indoor units 20 are connected by gas connection pipes GP and liquid connection pipes LP to configure the refrigerant circuit.

### (1-1-1) Outdoor unit 15

The outdoor unit 15 is installed outside the target space SP. The outdoor unit 15 mainly has a plurality of refrigerant pipes, a compressor, an outdoor heat exchanger, an expansion valve, and the like (not illustrated) as elements configuring the refrigerant circuit. Further, the outdoor unit 15 has various sensors such as a temperature sensor and a pressure sensor, and devices such as a fan.

The outdoor unit 15 also has an outdoor unit controller 18 that controls operations of various actuators in the outdoor unit 15. The outdoor unit controller 18 has a microcomputer including a CPU and a memory such as a RAM and a ROM, a communication module, various electronic components, and electric components. The outdoor unit controller 18 is electrically connected to various actuators and various sensors via wiring.

The outdoor unit controller 18 is connected to an indoor unit controller 25 (described later) of each indoor unit 20 via a communication line cb1, and transmits and receives signals to and from each other. The outdoor unit controller 18 is connected to a wide area network NW1 such as the Internet via a communication line cb2, and transmits and receives signals to and from a device (for example, a server 50) connected to the wide area network NW1.

### (1-1-2) Indoor unit 20

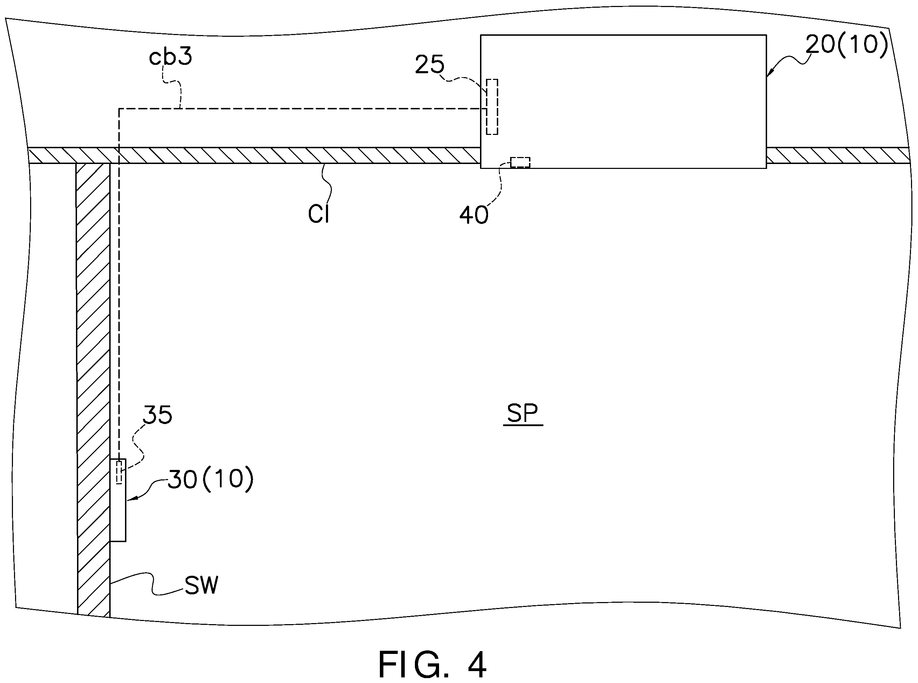

The indoor unit 20 is a ceiling-embedded air-conditioner indoor unit installed in a ceiling CI of the target space SP or a ceiling-suspended air-conditioning indoor unit installed near the ceiling CI. FIG. 4 is a schematic diagram showing one example of an installation mode of the indoor unit 20, the remote controller 30, and the photographing unit 40 in the target space SP. In FIG. 4, in the target space SP, each indoor unit 20 is installed such that a part of its main body (suction port and exhaust port) is exposed from the ceiling CI. The indoor unit 20 has an indoor heat exchanger, an indoor expansion valve, and the like as elements that configure the refrigerant circuit. The indoor unit 20 also has various sensors such as a pressure sensor and a temperature sensor that detect a temperature in the target space SP and a temperature of refrigerant.

Further, the indoor unit 20 has the indoor unit controller 25 that controls operations of various actuators (fan, expansion valve, and the like) in the indoor unit 20. The indoor unit controller 25 has a microcomputer including a memory such as a RAM and a ROM and a CPU, a communication module, various electronic components, and electric components. The indoor unit controller 25 is electrically connected to various actuators and various sensors via wiring, and transmits and receives signals to and from each other. The indoor unit controller 25 is connected to the outdoor unit controller 18 and/or another indoor unit controller 25 via the communication line cb1, and transmits and receives signals to and from each other. The indoor unit controller 25 is also connected to the remote controller control unit 35 (described later) of the corresponding remote controller 30 via a communication line cb3, and transmits and receives signals to and from each other. Further, the indoor unit controller 25 is connected to the corresponding photographing unit 40 via a communication line cb4, and transmits and receives signals to and from each other.

### (1-1-3) Remote controller 30

The remote controller 30 is associated with any of the indoor units 20, and is installed on a side wall SW of the same target space SP as the corresponding indoor unit 20. Specifically, the remote controller 30a is associated with the indoor unit 20a. The remote controller 30b is associated with the indoor unit 20b, the remote controller 30c is associated with the indoor unit 20c, the remote controller 30d is associated with the indoor unit 20d, the remote controller 30e is associated with the indoor unit 20e, and the remote controller 30f is associated with the indoor unit 20f. Each remote controller 30 is a so-called wired remote control device, and is connected to the corresponding indoor unit 20 (indoor unit controller 25) via the communication line cb3.

Each remote controller 30 functions as an input device for inputting commands relating to various settings to the air conditioner 10. Each remote controller 30 also functions as a display device that displays an operating state of the air conditioner 10 and setting items.

Each remote controller 30 has the remote controller control unit 35 that controls an operation of the remote controller 30.

### (1-2) Photographing unit 40 (photographing device)

The management system 100 has the plurality (here, 6 or more) of photographing units 40 (40a, 40b, 40c, 40d, 40e, 40f...). Each of the photographing units 40 is a unit that captures an image of the corresponding target space SP, and generates and outputs data (photographing data D1) including the captured result. Each of the photographing units 40 is disposed in the corresponding target space SP. In this embodiment, the photographing unit 40 is disposed in the indoor unit 20 installed in the ceiling CI (or near the ceiling) of the corresponding target space SP. The photographing unit 40, which is installed in the ceiling CI or near the ceiling (a part closer to the ceiling CI than a floor surface), can capture an image of a wide range of the target space SP. It is therefore possible to detect the location of the person PS in the target space SP with high accuracy.

In this embodiment, the photographing unit 40a is disposed in the target space SP1 (indoor unit 20a), the photographing unit 40b is disposed in the target space SP2 (indoor unit 20b), the photographing unit 40c is disposed in the target space SP3 (indoor unit 20c), the photographing unit 40d is disposed in the target space SP4 (indoor unit 20d), the photographing unit 40e is disposed in the target space SP5 (indoor unit 20e), and the photographing unit 40f is disposed in the target space SP6 (indoor unit 20f).

The photographing unit 40 has a photographing section 41, a photographing data generation section 42, and a photographing data output section 43. The photographing section 41 includes a lens (for example, but not limited to, a fisheye lens or a fixed focus lens) that captures an image of a predetermined range of the corresponding target space SP, and an image sensor. The photographing data generation section 42 A/D-converts an electrical signal output by the image sensor of the photographing section 41 to generate the photographing data D1 in a predetermined format. The photographing data D1 includes image data (moving image data) in which the predetermined range of the target space SP is represented by predetermined pixels. The photographing data output section 43 compresses the generated photographing data D1 and outputs the compressed photographing data D1 to the management device 60 (directly to the indoor unit controller 25).

### (1-3) Management device 60

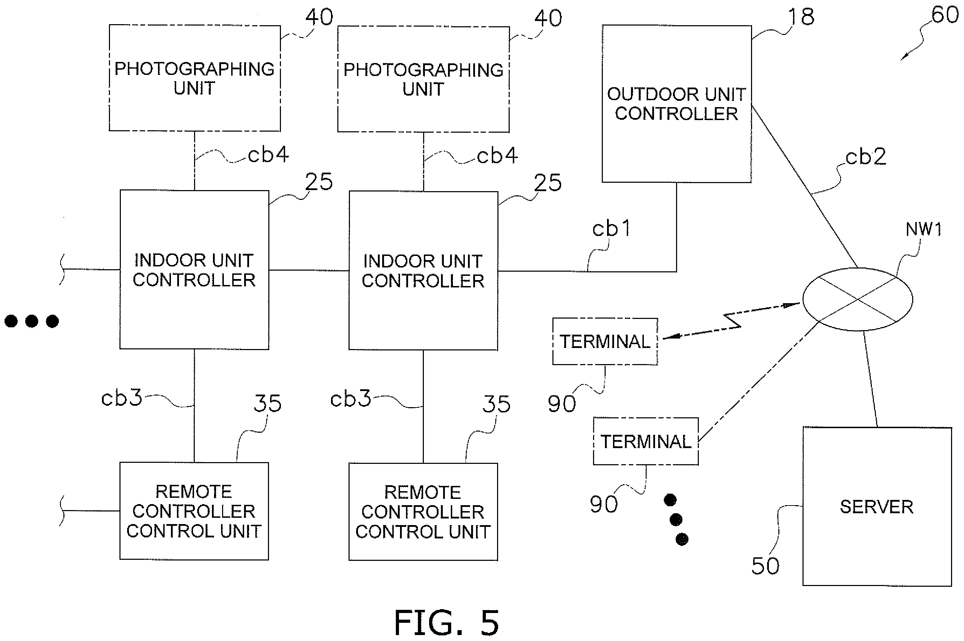

The management device 60 is a computer that comprehensively manages an operation of the management system 100. In this embodiment, the management device 60 is configured by connecting the outdoor unit controller 18, the indoor unit controller 25, the remote controller control unit 35, and the server 50 via a communication network, as shown in FIG. 5.

The server 50 is a computer that configures the management device 60 together with the outdoor unit controller 18, the indoor unit controller 25, and the remote controller control unit 35 in the management system 100. The server 50 is disposed at a remote place apart from the target space SP. The server 50 is connected to the wide area network NW1 by the communication line, and is configured to be communicable with the outdoor unit controller 18, the indoor unit controller 25, and the remote controller control unit 35 via the wide area network NW1.

The management device 60 transmits and receives data to and from the photographing unit 40 and a terminal 90. The management device 60 performs processing based on the photographing data D1. Specifically, the management device 60 individually extracts the person PS included in the photographing data D1 and generates and stores data corresponding to the person PS (person history data D3). The "extraction" here includes the distinction between a person and an object, the specification of an individual, or the determination of a movement content regarding the person PS included in the photographing data D1. The person history data D3 is data of the location history of the extracted one person PS in the target facility 1. A specific description on the person history data D3 will be given later.

Further, the management device 60 performs processing in response to the command input by a user and outputs the processing result. For example, when a command requesting to output the location history of the specific person PS (output request command) is input, the management device 60 generates data of information about the location (display data D4 described later) regarding the person PS designated in the command based on the person history data D3 and outputs the data.

### (1-4) Terminal 90

Here, the terminal 90 with which the management device 60 transmits and receives data will be described. The terminal 90 is an information terminal held by an administrator or a user. The terminal 90 is assumed to be a mobile terminal such as a smartphone or a tablet PC, or a personal computer such as a laptop computer, but alternatively, may be another information processing device.

The terminal 90 has a communication module and is configured to be communicable with other units (the outdoor unit controller 18, the indoor unit controller 25, the remote controller control unit 35, and the server 50) via the wide area network NW1. The terminal 90 is connected to the wide area network NW1 by either or both of wireless communication or/and wired communication.

The terminal 90 has an input unit for inputting a command. In the management system 100, the terminal 90 can function as a "command input unit" for inputting a command. The user can appropriately control the operations of the photographing unit 40 and the management device 60 by inputting a command using the terminal 90.

Further, the terminal 90 has a display unit that displays (outputs) information. In the management system 100, the terminal 90 can function as an "output unit" that displays information. The user can know an operation status and processing result of the management system 100 with the terminal 90.

By installing a predetermined application program, the terminal 90 can input a command to the management device 60 and display a response result of the management device 60.

### (2) Details of management device 60

As shown in FIG. 1, the management device 60 mainly includes functional units such as a storage unit 61, an acquisition unit 62, a data generation unit 63, a management unit 64, a reception unit 65, an information search unit 66, and an output control unit 67. Each functional unit is provided by operating any or all of the components of the management device 60 (here, the outdoor unit controller 18, each indoor unit controller 25, each remote controller control unit 35, and the server 50). The management device 60 is configured to be able to acquire the time in real time independently or from another device.

### (2-1) Storage unit 61

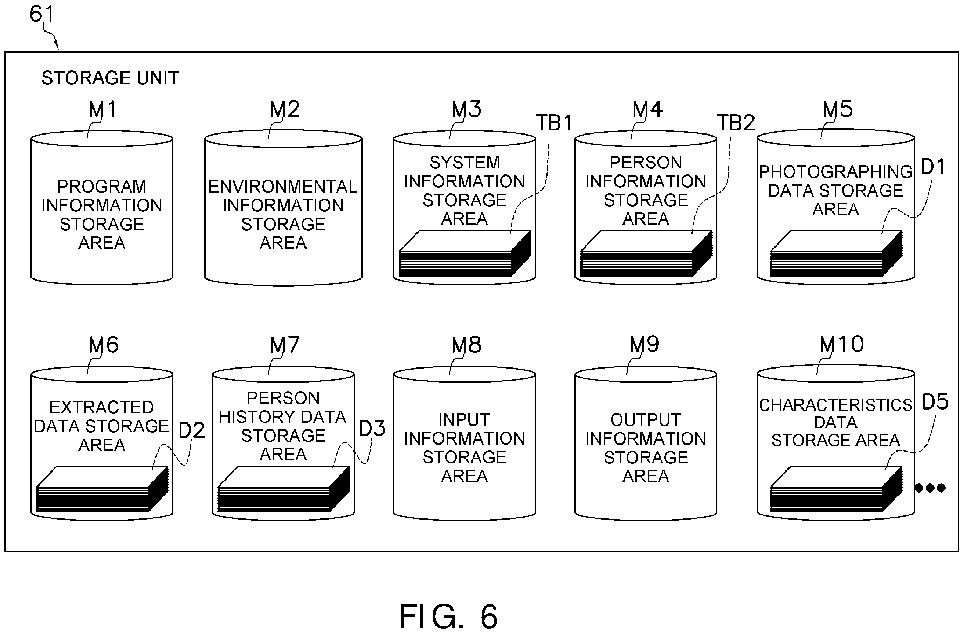

The storage unit 61 is configured by a memory such as a ROM, a RAM, a flash memory, or a hard disk included in any or all of the components of the management device 60. The storage unit 61 includes a plurality of storage areas, and has a volatile storage area that temporarily stores information and a non-volatile storage area that stores various kinds of information. Specifically, as shown in FIG. 6, the storage unit 61 includes storage areas such as a program information storage area M1, an environmental information storage area M2, a system information storage area M3, a person information storage area M4, a photographing data storage area M5, an extracted data storage area M6, a person history data storage area M7, an input information storage area M8, an output information storage area M9, and a characteristics data storage area M10. The various kinds of information stored in each storage area can be updated as appropriate.

The program information storage area M1 stores a control program that defines various processing performed in each unit of the management device 60, a communication protocol used for communication between the units, and the like.

Information (environmental information) about the target facility 1 is stored in the environmental information storage area M2. The environmental information includes, for example, information about the number, position, and size of each target space SP included in the target facility 1.

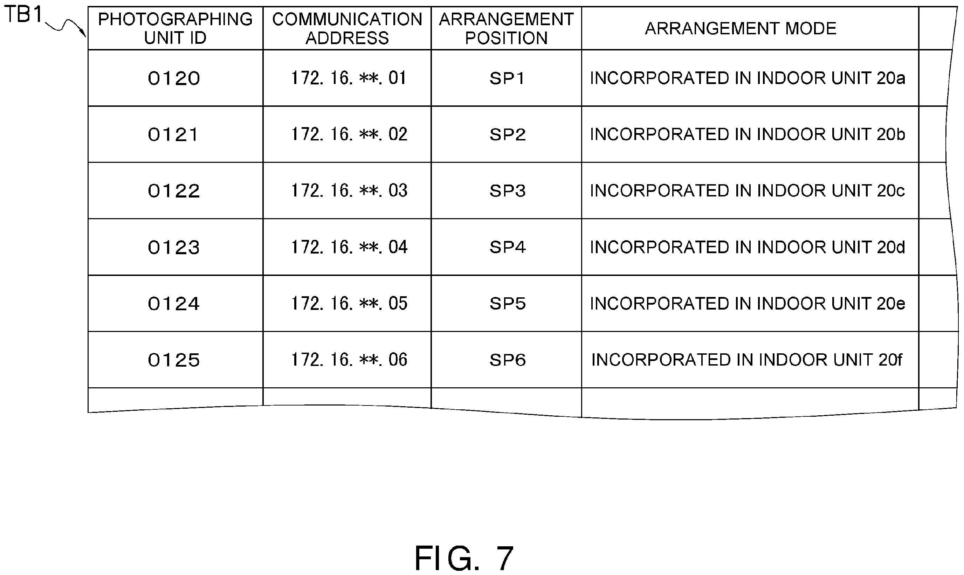

The system information storage area M3 stores information about devices included in the management system 100. For example, the system information storage area M3 stores information (photographing unit information) about the photographing unit 40 disposed in the target facility 1. The photographing unit information includes information about an ID, a communication address, an arrangement position, an arrangement mode, and others of the photographing unit 40 disposed in the target facility 1. The photographing unit information is stored as a photographing unit information table TB1 as shown in FIG. 7, for example. On the photographing unit information table TB1 in FIG. 7, it is specified that the communication address of the photographing unit 40 with the ID "0120" is "172.16.**.01", the arrangement position is "(target space) SP1", the arrangement mode is "being built in the indoor unit 20a" , and others.

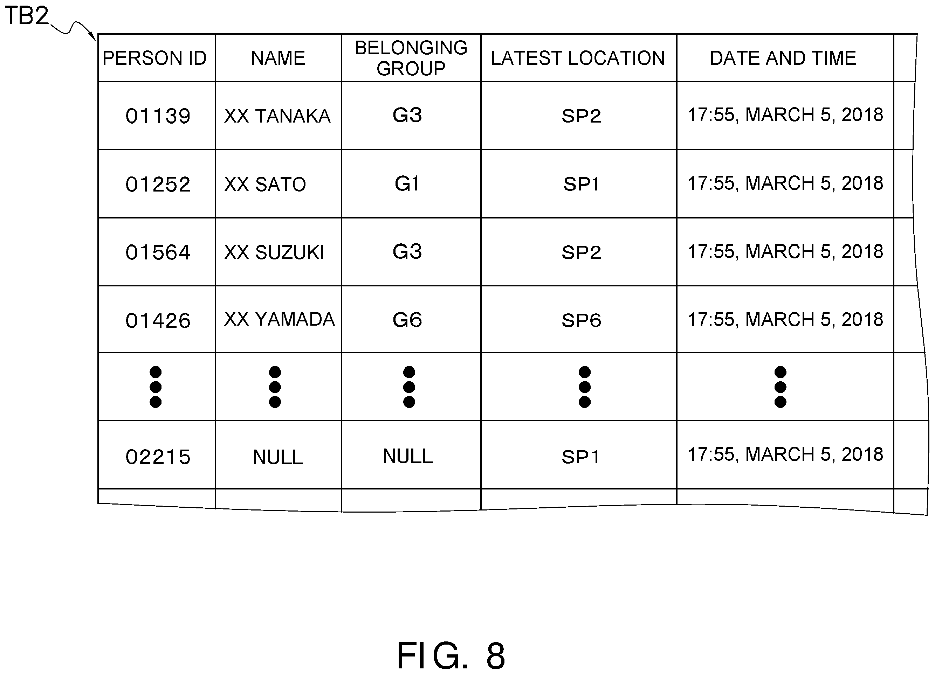

The person information storage area M4 stores information (person information) about the person PS registered in advance in the target facility 1 and the person PS detected in the past. The person information includes information about the ID (arbitrary or automatically assigned ID) of each person PS, the name, the belonging group, and others. The person information is stored as a person information table TB2 as shown in FIG. 8, for example. On the person information table TB2 in FIG. 8, it is specified, for example, with respect to the person PS with the ID "01139" that the name is "XX Tanaka", the belonging group is "G3", the latest (most recent) location is "(target space) SP2 ", and the latest location time is "17:55, March 5, 2018".

The photographing data storage area M5 stores the photographing data D1 output from each photographing unit 40. In the photographing data storage area M5, the photographing data D1 is stored for each photographing unit 40.

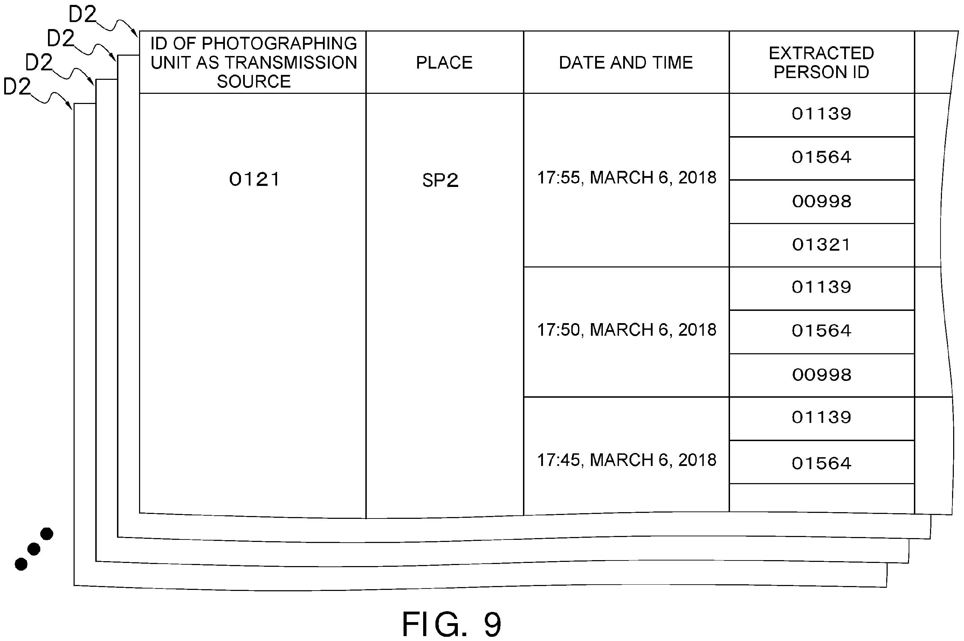

The extracted data storage area M6 stores data (extracted data D2) associated with the person PS extracted from the photographing data D1 output from the photographing unit 40. The extracted data D2 (corresponding to the "person data" described in the claims) is generated for each photographing unit 40 as a transmission source of the photographing data D1. Specifically, the extracted data D2 is generated for each received photographing data D1. The extracted data D2 includes information about the location of the extracted person PS and information about the location time of the extracted person PS. The extracted data D2 is, for example, as shown in FIG. 9, information about the ID and the photographing location of photographing unit 40 as the transmission source, reception date and time of the photographing data D1, the ID of the person PS extracted from the received photographing data D1, and the like. In FIG. 9, for example, with respect to the photographing data D1 that is transmitted from the photographing unit 40 with the ID "0121", and in which the photographing location is the "(target space) SP2", the photographing date and time is "17:55, March 6, 2018", it is specified that the IDs of the extracted persons PS are "01139", "01564", "00998", and "01321".

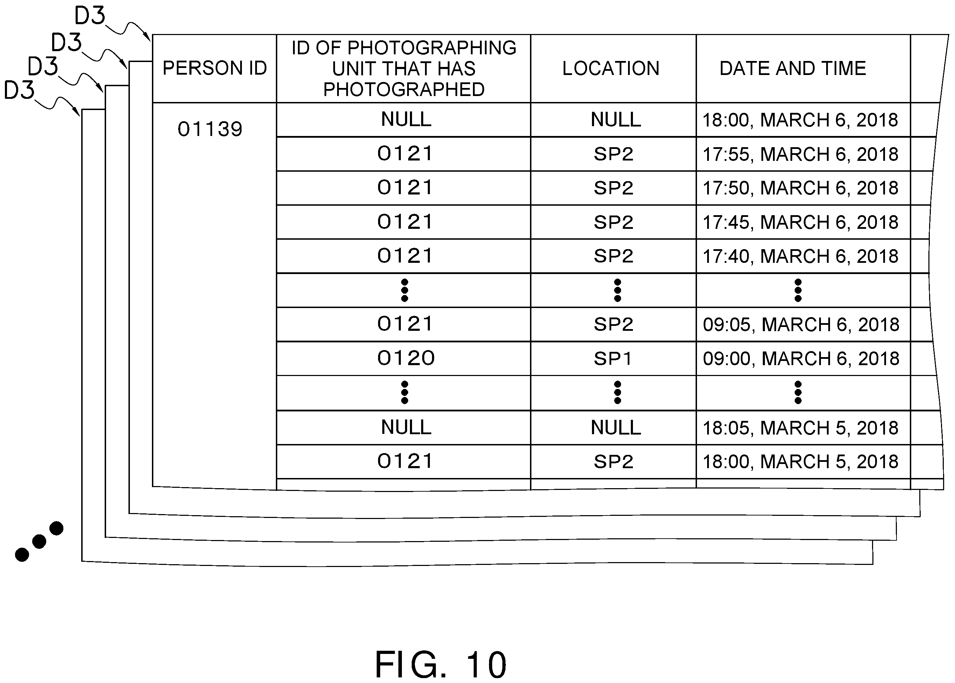

In the person history data storage area M7, location history data (person history data D3) regarding the person PS in the target facility 1 is individually stored. The person history data D3 is information about the location history of the person PS in the target facility 1. The person history data D3 is generated for each person PS. The person history data D3 is, for example, as shown in FIG. 10, information including the ID of the person PS, the ID of the photographing unit 40 that has photographed, a place (place of photographing), and date and time (date and time of photographing). In the person history data D3 shown in FIG. 10, for example, the location history of every five minutes regarding the person PS with the ID "01139" is specified. The location history specified in the person history data D3 does not have to be every five minutes, and the date and time relating to the location history can be changed as appropriate.

The input information storage area M8 stores information input to the management device 60. The input information storage area M8 stores, for example, commands input via the terminal 90.

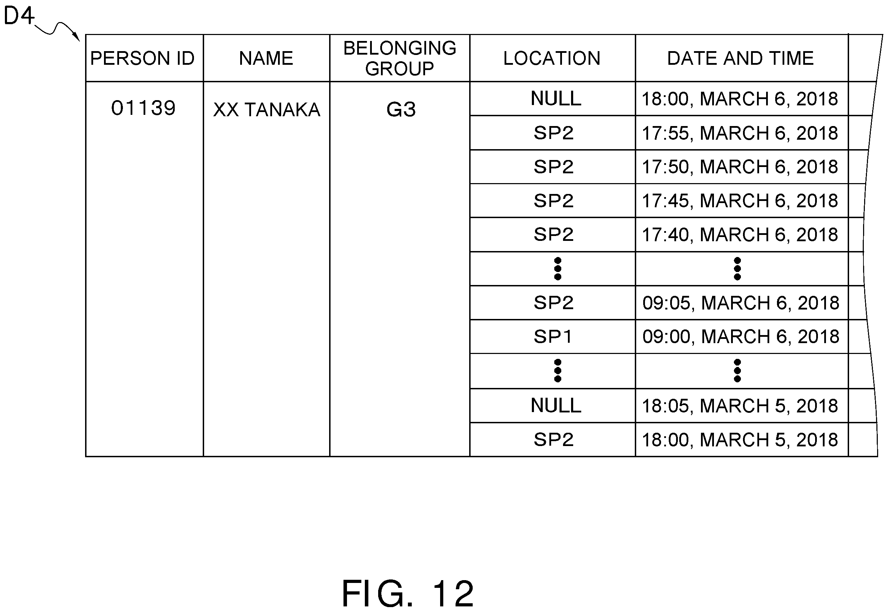

The output information storage area M9 stores information output from the management device 60 to another device. The output information storage area M9 stores, for example, the display data D4 (FIG. 12) to be displayed on the terminal 90.

The characteristics data storage area M10 stores general characteristics of the person PS and characteristics data D5 in which unique characteristics of the person PS extracted in the target space SP are individually specified. The characteristics data D5 is created for each person PS. The "characteristics" here are information used to uniquely specify the person PS. The "characteristics" are varied and include, for example, a shape, dimensions, color, or movement (movement speed, movement range, and movement angle) of a part of the person PS (for example, head, hair whorl, face, shoulders, arms, and legs).

### (2-2) Acquisition unit 62

The acquisition unit 62 acquires the photographing data D1 output from each photographing unit 40 and stores the photographing data D1 in the photographing data storage area M5 as appropriate.

### (2-3) Data generation unit 63

The data generation unit 63 extracts the person PS included in the photographing data D1 stored in the photographing data storage area M5 and generates the extracted data D2. The data generation unit 63 has an extraction unit 631 and an extracted data generation unit 633.

The extraction unit 631 acquires the photographing data D1 stored in the photographing data storage area M5 and performs processing (extraction processing) of individually extracting the person PS included in the acquired photographing data D1. The extraction unit 631 performs the extraction processing every hour. The extraction processing is performed for each photographing data D1 (that is, for each photographing unit 40 as the transmission source of the photographing data D1).

The extraction unit 631 has a learning unit 632 and is configured to perform machine learning. The learning unit 632 here performs machine learning using a means such as "neural network" or "deep learning". Such learning may be so-called supervised learning or unsupervised learning.

The extraction processing by the extraction unit 631 is performed using a predetermined means (including a known technology). For example, the extraction unit 631 extracts (detects and specifies) the person PS based on the characteristics data D5 in which the characteristics of the person PS are defined in advance. For example, the extraction unit 631 detects the person PS by identifying the characteristics of the person PS in the photographing data D1, and compares the identified characteristics with the characteristics defined in the characteristics data D5 to uniquely specify the person PS.

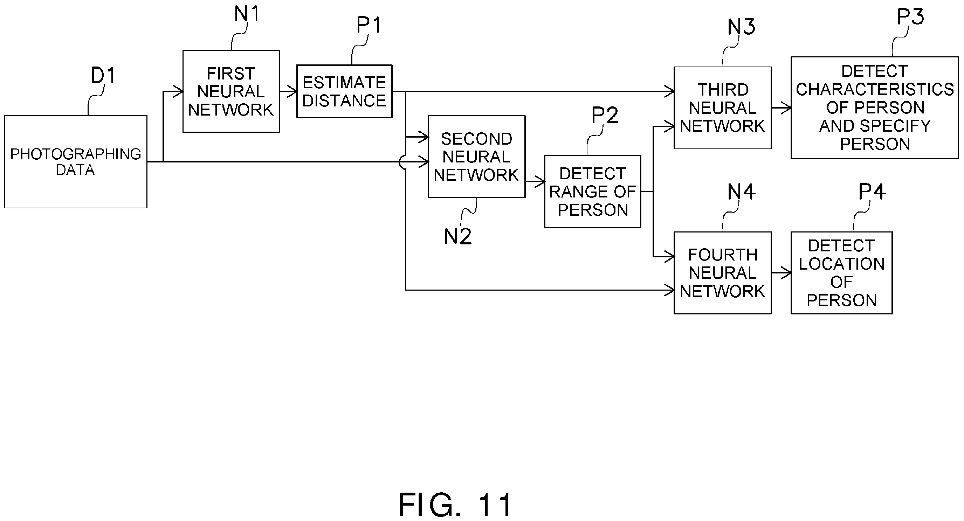

FIG. 11 shows one example of the extraction processing performed by the extraction unit 631. FIG. 11 shows an example in which the extraction unit 631 extracts the person PS in the target space SP using a plurality of neural networks (N1, N2, N3, and N4).

In FIG. 11, first, the photographing data D1 is input to a first neural network N1. The first neural network N1 performs a process P1 for detecting (estimating) a distance between each element included in the photographing data D1.

Further, a result of the process P1 is input to a second neural network N2 together with the photographing data D1. The second neural network N2 performs a process P2 for detecting (estimating) a range of the person PS included in the photographing data D1 based on the result of the process P1. When the range of the person PS can be detected, then the movement of the person PS can be detected, and the characteristics of the person PS can be acquired in a process P3 described later.

Further, the result of the process P2 is input to a third neural network N3 together with the result of the process P1. The third neural network N3 performs the process P3 for detecting and identifying the characteristics of the person PS included in the photographing data D1 based on the results of the process P1 and the process P2. In the process P3, the person PS is uniquely specified based on the detected characteristics of the person PS and the characteristics data D5 stored in the characteristics data storage area M10. For example, in the process P3, a similarity between each of the characteristics of the detected person PS and each of the characteristics data D5 stored in the characteristics data storage area M10 is calculated. The target person PS of the characteristics data D5 whose calculated similarity is equal to or greater than a predetermined threshold is extracted as the person PS that matches the detected characteristics, and the person PS is uniquely specified. Further, when the characteristics data D5 whose similarity with the characteristics of the detected person PS is equal to or greater than the predetermined threshold is not stored in the characteristics data storage area M10, the characteristics data D5 is newly generated regarding the person PS having the characteristics and stored as the newly detected person PS. The characteristics data D5 generated as a result of the process P3 is, for example, 100-dimensional vector data.

Further, the result of the process P2 is input to a fourth neural network N4 together with the result of the process P1. The fourth neural network N4 performs a process P4 for detecting the position (coordinates) of the person PS included in the photographing data D1 in the target space SP based on the results of the process P1 and the process P2.

That is, when the extraction processing is performed in this manner, the data generation unit 63 estimates the distance between the elements from the photographing data D1 in the extraction processing and extracts the person PS based on the estimated distance.

The learning unit 632 appropriately learns the characteristics of each person PS using various kinds of information (for example, information that can be acquired via the photographing data D1 or the wide area network NW1). For example, the learning unit 632 individually and specifically learns the characteristics of the person PS included in the photographing data D1, and appropriately updates the corresponding characteristics data D5. This suppresses fluctuations in the detection result due to changes in the characteristics of the person PS (for example, changes in clothes or hairstyle).

The extracted data generation unit 633 generates the extracted data D2 (FIG. 9) based on the result of the extraction processing by the extraction unit 631. The extracted data generation unit 633 incorporates information about the ID of the extracted person PS, a detection location (place), and detection time (location time) in the extracted data D2. The extracted data generation unit 633 generates the extracted data D2 for each photographing unit 40 as the transmission source of the photographing data D1.

In other words, the data generation unit 63 including the extraction unit 631 and the extracted data generation unit 633 is a functional unit that extracts the location and the location time of the person PS included in the photographing data D1 (the image captured by the photographing unit 40).

### (2-4) Management unit 64

The management unit 64 manages information of the person PS existing in the target space SP based on the extracted data D2. The management unit 64 performs processing periodically (for example, at five minutes intervals). For example, the management unit 64 individually generates the person history data D3 (FIG. 10) for each extracted person PS based on the extracted data D2 stored in the extracted data storage area M6 and stores the person history data D3 in the person history data storage area M7. Further, for example, the management unit 64 creates or updates the person information table TB2 and stores the person information table TB2 in the person information storage area M4.

### (2-5) Reception unit 65

The reception unit 65 acquires the information input to the management device and stores the information in the input information storage area M8. For example, the reception unit 65 acquires a command input via the terminal 90 and stores the command in the input information storage area M8. The command input to the management device 60 is, for example, an output request command that instructs the output of information about the location of the specific person PS (information about the place, the location, or the location history in a predetermined period). In the output request command, the target person PS is designated by using the information such as the ID, name, or belonging group of the person PS.

### (2-6) Information search unit 66

The information search unit 66 performs processing based on the output request command (search request) stored in the input information storage area M8. The information search unit 66 refers to each data stored in the storage unit 61 (person history data D3, person information, or the like) with respect to the person PS specified in the output request command, and searches for the person PS. The information search unit 66 generates the display data D4 indicating information about the location of the person PS (for example, the latest location space, location, or location history) as a search result.

The display data D4 is generated, for example, in a manner shown in FIG. 12. In the display data D4 shown in FIG. 12, the ID of the person PS specified in the output request command is "01139", the name is "XX Tanaka", the belonging group is "G3", and the location history for a period (designated period) from "18: 00, March 5, 2018" to "18:00, March 6, 2018" is specified. The information search unit 66 stores the generated display data D4 in the output information storage area M9.

### (2-7) Output control unit 67

The output control unit 67 transmits (outputs) the data stored in the output information storage area M9 to a destination device. For example, the output control unit 67 transmits the display data D4 stored in the output information storage area M9 to the terminal 90 as the transmission source of the output request command. As a result, the display data D4 (search result) generated by the information search unit 66 is transmitted to the terminal 90 as the transmission source of the output request command, and is displayed on the terminal 90.

### (3) Flow of processing by management device 60

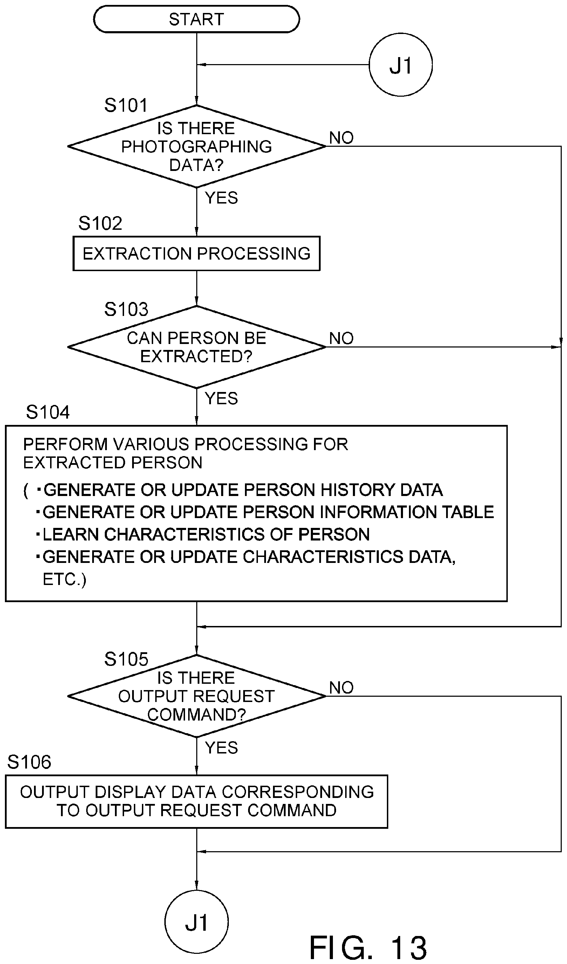

Hereinafter, one example of a flow of processing of the management device 60 will be described with reference to FIG. 13. FIG. 13 is a flowchart showing one example of the flow of the processing of the management device 60.

The management device 60 performs the processing in the flow shown in steps S101 to S106 in FIG. 13. Note that the flow of the processing shown in FIG. 13 can be changed as appropriate. As long as the processing is appropriately performed, an order of any of the steps may be interchanged, any of the steps may be simultaneously performed, or other steps not shown in the drawings may be added.

When the management device 60 does not receive the photographing data D1 in step S101 (in other words, when the new photographing data D1 is not stored in the storage unit 61, that is, in the case of NO), the flow of the processing proceeds to step S105. On the other hand, when the management device 60 receives the photographing data D1 (in other words, when the new photographing data D1 is stored in the storage unit 61, that is, in the case of YES), the flow of the processing proceeds to step S102.

In step S102, the management device 60 acquires the photographing data D1 from the storage unit 61 and performs the extraction processing of extracting the person PS included in the acquired photographing data D1 to generate the extracted data D2. After that, the flow of the processing proceeds to step S103.

When the person PS cannot be extracted as a result of the extraction processing in step S103 (when the person PS is not detected in the photographing data D1), that is, in the case of NO, the flow of the processing proceeds to step S105. On the other hand, when the person PS can be extracted as a result of the extraction processing (when the person PS is detected in the photographing data D1), that is, in the case of YES, the flow of the processing proceeds to step S104.

In step S104, the management device 60 performs a predetermined processing regarding the person PS extracted in the extraction processing. For example, the management device 60 generates or updates the person history data D3 for the person PS extracted in the extraction processing. Further, for example, the management device 60 generates or updates the person information table TB2 for the person PS extracted in the extraction processing. For example, the management device 60 learns the characteristics of the person PS extracted in the extraction processing. For example, the management device 60 generates or updates the characteristics data D5 regarding the person PS extracted in the extraction processing. After that, the flow of the processing proceeds to step S105.

In step S105, when the management device 60 has not received the output request command (that is, in the case of NO), the flow of the processing returns to step S101. On the other hand, when the management device 60 has received the output request command (that is, in the case of YES), the flow of the processing proceeds to step S106.

In step S106, the management device 60 generates the display data D4 indicating the location history of the person PS designated in the output request command for a designated period. The management device 60 outputs the generated display data D4 to the terminal 90 as the transmission source of the output request command. As a result, the generated display data D4 is displayed on the terminal 90 as the transmission source of the output request command.

### (4) Characteristics

### (4-1)

The management system 100 according to the above embodiment, has the photographing unit 40 installed in the target space SP, the data generation unit 63 that extracts the person PS in the target space SP based on the characteristic of the person PS included in the photographing data D1 (the image captured by the photographing unit 40) and generates the extracted data D2 (the data associated with the extracted person PS), the storage unit 61 that stores the extracted data D2 generated by the data generation unit 63, and the management unit 64 that manages information about the person PS existing in the target space SP based on the extracted data D2.

Thus, the characteristic of the person PS included in the photographing data D1 (captured image) of the photographing unit 40 are identified, and the information about the person PS existing in the target space SP is managed based on the extracted data D2 generated in relation to the extracted and specified person PS. This makes it possible to easily manage the information about the person PS (for example, location information and information on a location history or the like) in the target space SP. For example, it is possible to manage the information about a person other than a person who is recognized as a management target in advance, such as a person wearing a hat in which a chip including ID information is embedded. Further, this management system 100 is configured to be usable, for example, for attendance management of workers in a company, attendance management of students in schools, security management in facilities, and the like.

In addition, the photographing unit 40, which is installed in the ceiling CI (or near the ceiling) of the target space SP, makes it possible to capture an image of a wide range of the target space SP. It is therefore possible to detect the location of the person PS in the target space SP with high accuracy.

### (4-2)

In the above embodiment, the data generation unit 63 is configured to extract the location of the person PS included in the photographing data D1 (the image captured by the photographing unit 40). The extracted data D2 includes information about the location of the person PS. This makes it possible to easily manage the location of the person PS in the target space SP.

### (4-3)

In the above embodiment, the data generation unit 63 extracts the location time of the person PS included in the photographing data D1 (the image captured by the photographing unit 40). The extracted data D2 includes information regarding the location time of the extracted person PS. This makes it possible to easily manage the location history of the person PS in the target space SP.

### (4-4)

In the above embodiment, the data generation unit 63 extracts the person PS based on the characteristics (movement or the like) of the person PS in the target space SP. For example, when a movement peculiar to a person such as walking, working, doing desk work, or eating and drinking is recognized, the target performing the movement is recognized as the person PS or specified as an individual. This makes it possible to extract the person PS and identify the individual with high accuracy.

### (4-5)

In the above embodiment, the data generation unit 63 estimates the distance between the elements from the photographing data D1 in the extraction processing, and extracts the person PS based on the estimated distance. This makes it possible to extract the person PS and specify the individual with high accuracy.

### (4-6)

In the above embodiment, the data generation unit 63 includes the learning unit 632 that learns the characteristics of the person PS based on the image captured by the photographing unit 40. This makes it possible to extract the person PS and specify the individual with high accuracy.

### (4-7)

In the above embodiment, the management unit 64 individually generates the person history data D3 regarding the location history of the person PS existing in the target space SP based on the extracted data D2 stored in the storage unit 61. As a result, the location history of the person is automatically generated.

### (4-8)

The management system 100 according to the above embodiment has the plurality of photographing units 40, and the data generation unit 63 is configured to identify the characteristics of the person PS based on the images captured by the plurality of photographing units 40. As a result, the person PS can be extracted in a wide range.

### (4-9)

In the above embodiment, each of the photographing units 40 is disposed in the air conditioner (indoor unit 20) installed in the target space SP. Each photographing unit 40, which is disposed in such a manner, makes it possible to extract the person PS in a wide range within the target space SP.

### (5) Modifications

The above embodiment can be appropriately modified as described in the following modifications. Note that the modifications are applicable in combination with another modification insofar as no inconsistency arises.

### (5-1) Modification 1

The management system 100 may be configured as a system that manages the behavior content or behavior history of each person PS based on the person history data D3 individually generated for the person PS existing in a specific space (target space SP). In this case, a difference from the above embodiment will be described below.

Specifically, in this case, the data generation unit 63 extracts not only the location and the location time of the person PS included in the photographing data D1, but also the behavior content. The data generation unit 63 extracts the person PS included in the photographing data D1 stored in the photographing data storage area M5 and the behavior content of the person PS, and generates the extracted data D2.

More specifically, the extraction unit 631 of the data generation unit 63 acquires the photographing data D1 stored in the photographing data storage area M5 in the extraction processing, extracts the person PS included in the acquired photographing data D1, and individually extracts the behavior content of the person. The extraction unit 631 extracts the behavior content of the person PS based on the location, the person or object existing in a vicinity, movement range, movement angle, or the like with respect to the person PS. The "behavior content" here includes not only the presence or absence of the person PS in the target space SP, but also a specific action or work content of the person PS in the target space SP. For example, the "behavior content" includes detailed behavior of the person PS such as "reading," "writing," "working using a PC," "an application in the most active state on the PC (that is, the application that is mainly used)," "talking on the phone", "a conversation", "a conversation partner", "a meeting", "eating", "water intake", "content of food or drink ingested (item, intake or residual amount, or the like)", "work using a printer", "cleaning", "an operation on a manufacturing line", "walking", or "exercises".

The extracted data generation unit 633 of the data generation unit 63 generates the extracted data D2 based on the result of the extraction processing by the extraction unit 631. The extracted data generation unit 633 incorporates information about the ID of the extracted person PS, a detection location (place), detection time (location time), and behavior content in the extracted data D2. The extracted data D2 in this case includes information about the location and the location time of the extracted person PS, and information about the behavior content regarding the extracted person PS.

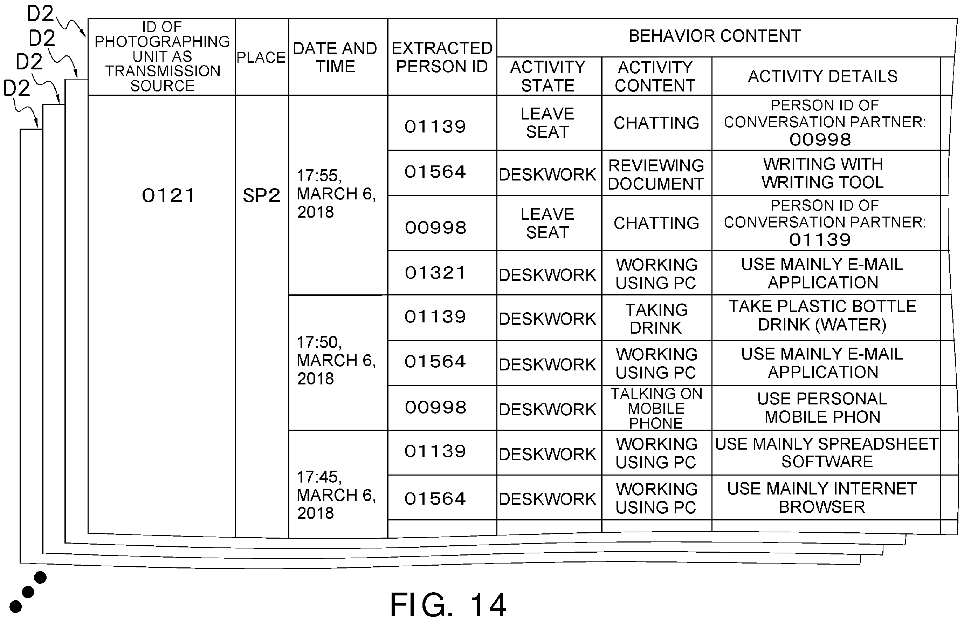

The extracted data D2 is, for example, as shown in FIG. 14, information about the ID and the photographing location of the photographing unit 40 as the transmission source, the reception date and time of the photographing data D1, the ID and the behavior content of the person PS extracted from the received photographing data D1. Note that the extracted data D2 does not have to be generated in a manner shown in FIG. 14, and a generation mode of the extracted data D2 can be changed as appropriate. For example, the extracted data D2 may include other information instead of any of the information included in FIG. 14.

In FIG. 14, an activity state (main activity), activity content (specific activity content), activity details (details of activity content), and the like are specified as the behavior content of the extracted person PS. Specifically, in FIG. 14, for example, with respect to the photographing data D1 that is transmitted from the photographing unit 40 with the ID "0121", and in which the photographing location is the "(target space) SP2", and the photographing date and time is "17:45, March 6, 2018", it is specified that the behavior content of the person PS with the extracted ID "01139" is in a state (activity state) of doing "desk work", "working using a PC" (activity content), and "using mainly spreadsheet software" (activity details). That is, in FIG. 14, with respect to the extracted person PS, information about the work content in the information processing device is specified.

Further, in FIG. 14, with respect to the photographing data D1 in which the photographing date and time is "17:50, March 6, 2018", doing "desk work" (activity state), "taking a drink" (activity content), "taking a plastic bottle drink (water)" (activity details), and the like are specified as the behavior content of the person PS with the extracted ID "01139".

Further, in FIG. 14, with respect to the photographing data D1 in which the photographing date and time is "17:55, March 6, 2018", "leaving seat" (activity state), "chatting" (activity content), that "person ID of the conversation partner is 00998" (activity details), and the like are specified as the behavior content of the person PS with the extracted ID "01139". That is, in the extracted data D2 shown in FIG. 14, the conversation partner is specified for the extracted person PS.

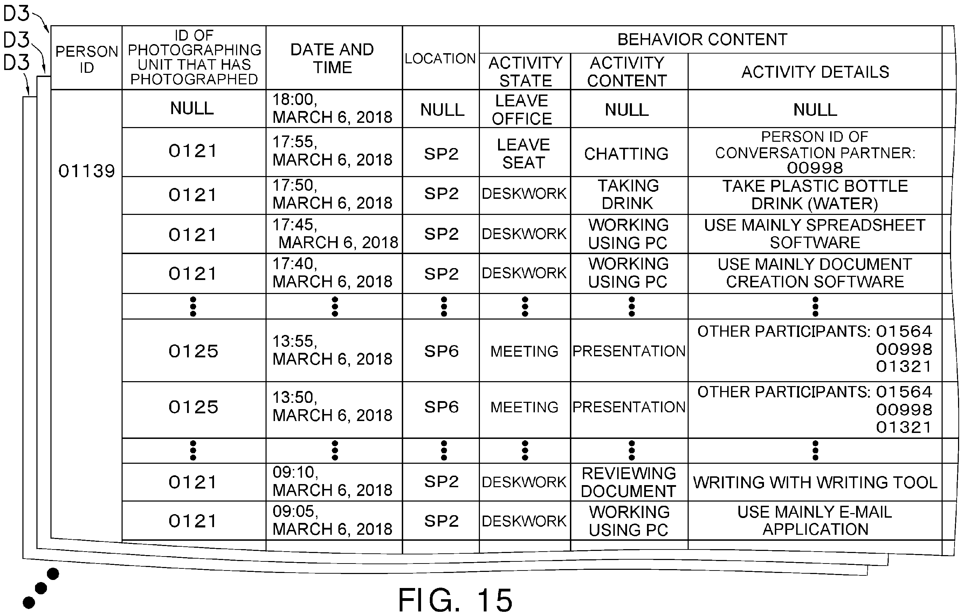

Based on this extracted data D2, the person history data D3 is generated as information about the history of the behavior content (behavior history) of the person PS in the target facility 1. The person history data D3 is, for example, as shown in FIG. 15, information including the ID of the person PS, the ID of the photographing unit 40 that has photographed, the place (place of photographing), the date and time (date and time of photographing), and the behavior history. In the person history data D3 shown in FIG. 15, the behavior history every five minutes regarding the person PS with the ID "01139" is specified. The behavior history defined in the person history data D3 does not have to be every five minutes. Further, the person history data D3 does not have to be generated in a manner shown in FIG. 15, and a generation mode of the person history data D3 can be changed as appropriate. For example, the person history data D3 may include other information instead of any of the information included in FIG. 15. For example, the person history data D3 may include information about "the intake amount or the remaining amount of the ingested food or drink". Further, for example, the person history data D3 may include information about "a website on the Internet displayed on the PC in use".

The person history data D3 generated in this manner can be used for various purposes such as analysis or optimization of daily activities, creation or evaluation of a plan, and evaluation or health management of the person PS.

The management device 60 may well acquire the information about "the application in the most active state on the PC" based on the captured result of the photographing unit 40. In addition, the information may be acquired from the information processing device such as a personal computer used by the extracted person PS via the communication network. In this case, the management device is communicatively connected to the information processing device used by the person PS by the communication network (wireless network and/or wired network). The information is acquired, for example, by the acquisition unit 62.

When the output request command requesting to output the behavior history of the specific person PS is input, the management device 60 may be configured to generate the display data D4 indicating the information about the behavior history based on the person history data D3 with regard to the person PS specified in the command and output the display data D4. That is, in step S106 of the flow in FIG. 13, the management device 60 may be configured to generate the display data D4 indicating the history of the behavior content (behavior history) of the person PS in the output request command for the period designated.

For example, the information search unit 66 may search for the person PS designated in the output request command by referring to each data stored in the storage unit 61 (person history data D3, person information, or the like), and generate the display data D4 indicating the information about the behavior history of the person PS as the search result.

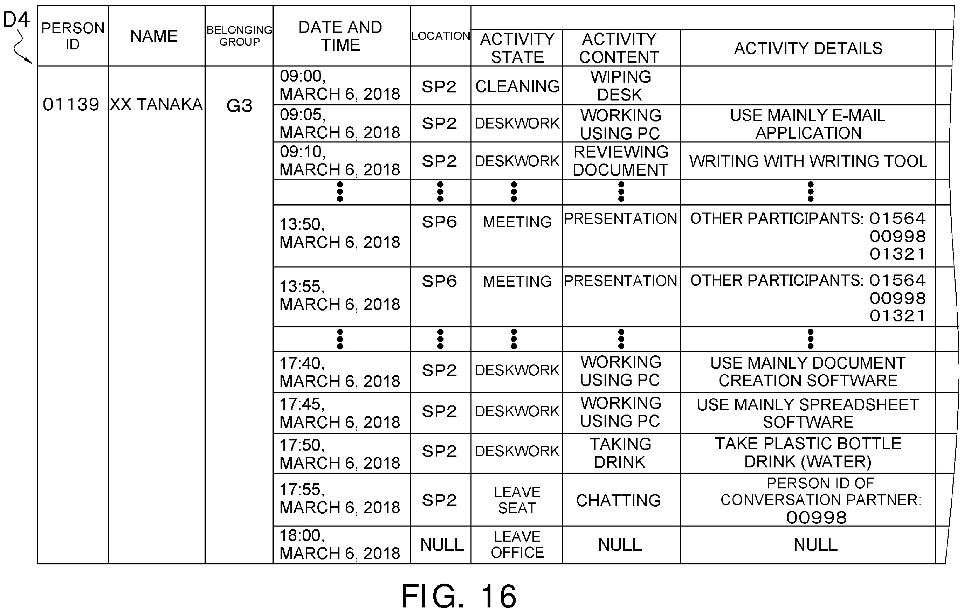

In this case, the display data D4 is generated, for example, in the manner shown in FIG. 16. Note that the display data D4 does not have to be generated in the mode shown in FIG. 16, but a generation mode of the display data D4 can be changed as appropriate. For example, the display data D4 may include other information instead of any of the information included in FIG. 16.

In the display data D4 shown in FIG. 16, the ID of the person PS specified in the output request command is "01139", the name is "XX Tanaka", the group is "G3", and the behavior history in the period (designated period) from "9:00, March 6, 2018" to "18:00, March 6, 2018" is specified. In the person history data D3 shown in FIG. 16, attending a "meeting" (activity state), giving a "presentation" (activity content), and that "the IDs of other participants are 0164, 00998, and 91321" (activity details) are specified, for example, as the behavior history at "13:50, March 6, 2018".

The management device 60 also outputs the generated display data D4 to the terminal 90 as the transmission source of the output request command. As a result, the generated display data D4 is displayed on the terminal 90 as the transmission source of the output request command.

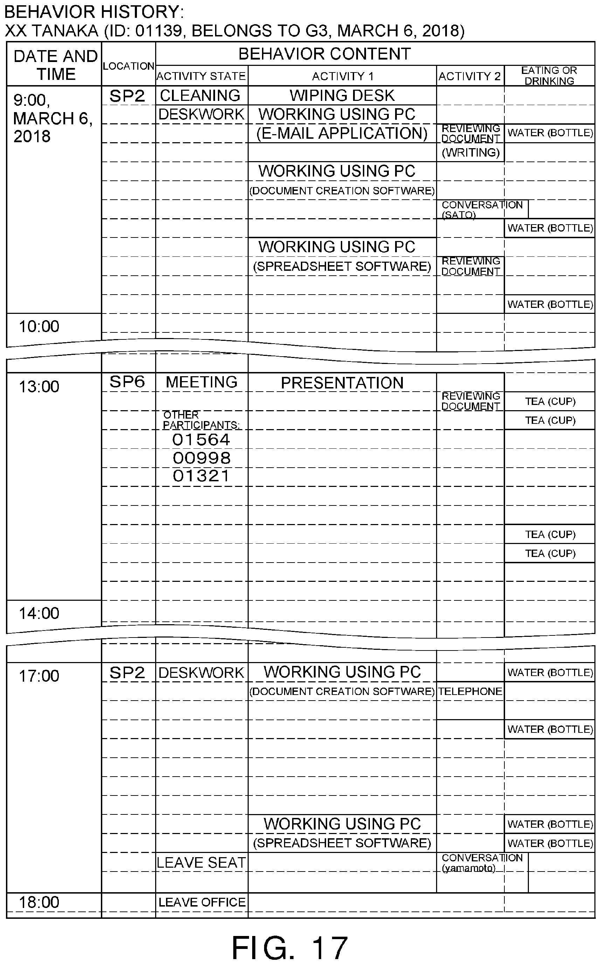

The display data D4 may be generated, for example, in a manner shown in FIG. 17. FIG. 17 shows one example of the display data D4 when the behavior history is displayed on the display of the terminal 90. FIG. 17 shows in detail the behavior history of the target person PS in the designated period. The generation mode of the display data D4 can be changed as appropriate.

The management device 60 is configured in a manner according to this modification, and it is therefore possible to know the specific behavior content of the person PS. In particular, the detailed behavior history of each person PS can be managed while suppressing labor.

### (5-2) Modification 2

In the above embodiment, the photographing unit 40 is disposed in the ceiling-embedded indoor unit 20 that is embedded in the ceiling CI of the target space SP. However, the arrangement mode of the photographing unit 40 is not limited to this, but can be changed as appropriate. For example, any or all of the photographing units 40 may be disposed in the ceiling-suspended indoor unit 20 that is hung from the ceiling of the target space SP, or may be disposed in the wall-mounted indoor unit 20 installed on the side wall SW of the target space SP. Further, for example, any or all of the photographing units 40 do not have to be disposed in the indoor unit 20, but may be disposed in another device or may be installed independently.

Further, the photographing unit 40 does not have to be disposed in the ceiling of the target space SP or near the ceiling when there is no obstacle in photographing the target space SP. For example, the photographing unit 40 may be installed at a position closer to the floor surface than the ceiling.

### (5-3) Modification 3

In the above embodiment, the example has been described in which the extraction processing is performed in the manner as shown in FIG. 11. However, the extraction processing may well be performed in another manner. For example, the extraction processing may be performed using a means other than the neural network. For example, the person PS may be extracted and specified by extracting the characteristics of the person PS registered in advance by the administrator or the like from the photographing data D1 based on the data defining the characteristics. Further, in the extraction processing, the person PS does not have to be extracted based on the movement of the person PS. That is, the characteristics of the person PS used in the extraction processing can be changed as appropriate.

The extraction processing does not have to be performed every hour, but may be performed at a predetermined timing. For example, the extraction processing may be performed regularly (for example, in a five-minute cycle).

The extraction processing does not have to be performed based on the moving image (photographing data D1). For example, the extraction processing may be performed based on a plurality of still images (photographing data D1).

### (5-4) Modification 4

In the above embodiment, the photographing data D1 includes image data (moving image data) in which the predetermined range of the target space SP is represented by the predetermined pixels. However, a format of the photographing data D1 can be changed as appropriate in accordance with an installation environment, a design specification, and the like. For example, the photographing data D1 may be image data (still image) that represents a predetermined range of the target space SP with predetermined pixels.

### (5-5) Modification 5

In the above embodiment, one photographing unit 40 is disposed in one target space SP. However, the arrangement mode of the photographing unit 40 is not limited to this, but can be changed as appropriate. For example, a plurality of the photographing units 40 may be disposed in one target space SP. In this case, the characteristics of the person PS are identified based on the respective pieces of photographing data D1 captured by the plurality of photographing units 40. That is, the extraction processing, which is performed based on the photographing data D1 captured at different photographing angles in one target space SP, enables extraction of the person PS and identification of the individual with high accuracy.

### (5-6) Modification 6

In the above embodiment, the photographing unit information is generated as the photographing unit information table TB1 as shown in FIG. 7. The photographing unit information does not have to be generated in such a manner, but the generation mode of the photographing unit information can be changed as appropriate.

### (5-7) Modification 7

In the above embodiment, the person information is generated as the person information table TB2 as shown in FIG. 8, for example. The person information does not have to be generated in such a manner, but the generation mode of the person information can be changed as appropriate. That is, the person information table TB2 may include other information (for example, information about the dimension of the person PS, the state of the person PS, and a relationship between the persons PS) instead of any of the information included in FIG. 8.

### (5-8) Modification 8

In the above embodiment, the extracted data D2 is generated in the manner as shown in FIG. 9. However, the extracted data D2 does not have to be generated in this manner, but the generation mode of the extracted data D2 can be changed as appropriate. For example, the extracted data D2 may include other information instead of any of the information included in FIG. 9.

### (5-9) Modification 9

In the above embodiment, the person history data D3 is generated in the manner as shown in FIG. 10. However, the person history data D3 does not have to be generated in this manner, but the generation mode of the person history data D3 can be changed as appropriate. For example, the person history data D3 may include other information instead of any of the information included in FIG. 10.

### (5-10) Modification 10

In the above embodiment, the display data D4 is generated in the manner as shown in FIG. 12. However, the display data D4 does not have to be generated in this manner, but the generation mode of the display data D4 can be changed as appropriate. For example, the display data D4 may include other information instead of any of the information included in FIG. 12. Further, for example, when the output request command requests the location of the person PS, the display data D4 may indicate only the latest location space and location of the person PS. In addition, for example, when the output request command requests the location of the person PS, the photographing data D1 of the photographing unit 40 that captures an image of the target space SP in which the specified person PS exists may be output as the display data D4.

### (5-11) Modification 11

In the above embodiment, the management device 60 extracts the person PS in the photographing data D1 and then performs the predetermined processing for the extracted person PS (step S104 in FIG. 13). Here, any of the processing in step S104 in FIG. 13 may be appropriately omitted. For example, the management device 60 does not have to learn the characteristics of the person PS extracted in the extraction processing. Further, for example, the management device 60 does not have to generate or update the characteristics data D5 regarding the person PS extracted in the extraction processing.

### (5-12) Modification 12

In the above embodiment, the management device 60 generates the person history data D3 based on the extracted data D2 generated based on the photographing data D1, and generates the processing result (display data D4) for the output request command (search request) based on the person history data D3. However, the management device 60 may generate the processing result (display data D4) for the output request command (search request) based on the extracted data D2 instead of the person history data D3.

### (5-13) Modification 13

In the above embodiment, the data generation unit 63 has the learning unit 632 that learns the characteristics of the person PS based on the photographing data D1. However, the data generation unit 63 does not have to have the learning unit 632.

### (5-14) Modification 14

In the above embodiment, the management system 100 is applied in the target facility 1 including the plurality (six) of target spaces SP. However, the number of target spaces SP in the target facility 1 to which the management system 100 is applied can be changed as appropriate. For example, the management system 100 may be applied to a target facility including 7 or more or 5 or less target spaces SP. Moreover, for example, the management system 100 may be applied to a target facility including a single target space SP.

### (5-15) Modification 15

In the above embodiment, the terminal 90 functions as the "input unit" that inputs the output request command to the management device 60. However, the mode is not limited to this, but a device other than the terminal 90 may function as the "input unit". For example, the remote controller 30, the server 50, or another device may function as the "input unit".

Further, in the above embodiment, the terminal 90 functions as the "output unit" that outputs the processing result (display data D4) for the output request command. However, the mode is not limited to this, but a device other than the terminal 90 may function as the "output unit". For example, the remote controller 30, the server 50, or another device may function as the "output unit".

An information output mode in the "output unit" is not limited to a data display. For example, when the "output unit" has a speaker capable of outputting audio, the processing result for the output request command may be output by outputting audio data.

### (5-16) Modification 16

In the above embodiment, the communication network is configured using the communication lines between the units (for example, between the outdoor unit controller 18 and the indoor unit controller 25, between the indoor unit controller 25 and the indoor unit controller 25, between the indoor unit controller 25 and the remote controller control unit 35, and between the indoor unit controller 25 and the photographing unit 40). However, in addition to the communication lines or instead of the communication lines, the communication network may well be configured by wireless communication using radio waves or infrared rays between the units. The outdoor unit controller 18 or the server 50 may be connected to the wide area network NW1 by wireless communication in addition to or instead of the communication line.

### (5-17) Modification 17

In the above embodiment, the server 50 is configured to be communicable with the outdoor unit controller 18, the indoor unit controller 25, and the remote controller control unit 35 via the wide area network NW1, but may be configured to communicable with these units via a local area network (LAN).

### (5-18) Modification 18

In the above embodiment, the management device 60 is configured by connecting the outdoor unit controller 18, the indoor unit controller 25, the remote controller control unit 35, and the server 50 via the communication network. However, a configuration mode of the management device 60 is not limited to this, but may be configured in other modes. For example, any one of the outdoor unit controller 18, the indoor unit controller 25, the remote controller control unit 35, or the server 50 may be omitted as a component of the management device 60. Further, for example, instead of / in addition to any of the outdoor unit controller 18, the indoor unit controller 25, the remote controller control unit 35, or the server 50, the management device 60 may be configured by connecting another device via the communication network. In addition, the management device 60 does not have to be configured across the wide area network NW1, but may be configured only by devices connected to the LAN.

### (5-19) Modification 19

The "person" in the above embodiment can be read as a living thing. In other words, the management system 100 may be configured as a system that manages the location history, behavior content, or behavior history of each living thing based on living thing history data D3 individually generated for the living thing existing in the target space SP. The living thing here is not limited as long as the living thing can be extracted from the photographing data D1, but is, for example, a pet, livestock, or a wild animal. That is, an idea according to the present disclosure can be applied to living things other than humans.

### (6)

The embodiment of the present disclosure has been described above. However, it should be construed that various modifications to modes and details will be available without departing from the object and the scope of the present disclosure recited in the claims.

### INDUSTRIAL APPLICABILITY

The present disclosure can be used for an information management system.

### REFERENCE SIGNS LIST

1: Target facility
10: Air conditioner
15: Outdoor unit
18: Outdoor unit controller
20, (20a-20f): Indoor unit (air conditioner)
25: Indoor unit controller
30, (30a-30f): Remote controller
35: Remote controller control unit
40, (40a-40f): Photographing unit (photographing device)
41: Photographing section
42: Photographing data generation section
43: Photographing data output section
50: Server
60: Management device
61: Storage unit
62: Acquisition unit
63: Data generation unit
64: Management unit
65: Reception unit
66: Information search unit
67: Output control unit (output unit)
90: Terminal (output unit)
100: Management system (information management system)
631: Extraction unit
632: Learning unit
633: Extracted data generation unit
CI: Ceiling
D1: Photographing data
D2: Extracted data (person data)
D3: Person history data
D4: Display data
D5: Characteristics data
GP: Gas connection pipe
LP: Liquid connection pipe
M1: Program information storage area
M2: Environmental information storage area
M3: System information storage area
M4: Person information storage area
M5: Photographing data storage area
M6: Extracted data storage area
M7: Person history data storage area
M8: Input information storage area
M9: Output information storage area
M10: Characteristics data storage area
N1: First neural network
N2: Second neural network
N3: Third neural network
N4: Fourth neural network
NW1: Wide area network
PS: Person
SP, (SP1-SP6): Target space
SW: Side wall
TB1: Photographing unit information table
TB2: Person information table
cb1-cb4: Communication line

### CITATION LIST

### PATENT LITERATURE

[Patent Literature 1] JP 2017-45373 A

## Claims

1. An information management system (100) comprising:
a photographing device (40) installed in a target space (SP);
a data generation unit (63) that extracts a person (PS) in the target space based on characteristic of the person included in an image (D1) captured by the photographing device, and generates person data (D2) associated with the person that has been extracted;
a storage unit (61) that stores the person data generated by the data generation unit; and
a management unit (64) that manages information about the person existing in the target space based on the person data.

2. The information management system (100) according to claim 1, wherein
the data generation unit extracts a location of the person included in the image captured by the photographing device, and
the person data includes information about the location of the person.

3. The information management system (100) according to claim 1 or 2, wherein
the data generation unit extracts location time of the person included in the image captured by the photographing device, and
the person data includes information about the location time of the person that has been extracted.

4. The information management system (100) according to any one of claims 1 to 3, wherein
the data generation unit extracts behavior content regarding the person included in the image captured by the photographing device, and
the person data includes information about the behavior content of the person that has been extracted.

5. The information management system (100) according to claim 1 or 2, wherein
the data generation unit extracts location time and behavior content of the person included in the image captured by the photographing device, and
the person data includes information about the location time and the behavior content of the person that has been extracted.

6. The information management system (100) according to claim 4 or 5, wherein the data generation unit extracts a conversation partner as the behavior content with respect to the person included in the image captured by the photographing device.

7. The information management system (100) according to any one of claims 4 to 6, wherein the person data includes information about a history of the behavior content of the person that has been extracted.

8. The information management system (100) according to any one of claims 1 to 7, wherein
the data generation unit extracts work content in an information processing device with respect to the person who is working using the information processing device, and
the person data includes information about the work content in the information processing device with respect to the person included in the image captured by the photographing device.

9. The information management system (100) according to any one of claims 1 to 8, further comprising an output unit (67, 90) that outputs the person data.

10. The information management system (100) according to any one of claims 1 to 9, wherein the data generation unit extracts the person based on a movement of the person in the target space.

11. The information management system (100) according to any one of claims 1 to 10, wherein the data generation unit estimates a distance between elements from the image, and extracts the person based on the distance that has been estimated.

12. The information management system (100) according to any one of claims 1 to 11, wherein the data generation unit includes a learning unit (632) that learns characteristic of the person based on the image captured by the photographing device.

13. The information management system (100) according to any one of claims 1 to 12, wherein the management unit individually generates person history data (D3) regarding a location history or a behavior history with respect to the person existing in the target space based on the person data stored in the storage unit.

14. The information management system (100) according to any one of claims 1 to 13, comprising a plurality of the photographing devices,
wherein the data generation unit identifies the characteristic of the person based on the image captured by the plurality of photographing devices.

15. The information management system (100) according to any one of claims 1 to 14, wherein the photographing device is disposed in an air conditioner (20) installed in the target space.
